# FASCICULE DE BREVET EUROPEEN

(11) **EP 1 871 722 B1**
(45) Date de publication et mention de la délivrance du brevet: **03.06.2009**
(21) Numéro de dépôt: 06743690.7
(22) Date de dépôt: 13.04.2006
(51) Int. Cl.: C04B 24/40

(54) **ADJUVANT POUR REDUIRE LES IONS CHROME (VI) EN CHROME (III)**
ADJUVANS ZUR REDUKTION VON CHROM (VI)-IONEN IN CHROM (III)
ADJUVANT FOR REDUCING CHROMIUM (VI) IONS INTO CHROMIUM (III)

(30) Priorité: 18.04.2005 FR 0503855
(43) Date de publication de la demande: 02.01.2008
(73) Titulaire: Chryso, 92440 Issy-Les-Moulineaux (FR)
(72) Inventeur: ANDREANI, Pierre-Antoine, F- 38780 ESTABLIN (FR); PELLERIN, Bruno, F-77210 Avon (FR); AYME, Karen, F-45300 Pithiviers (FR)
(74) Mandataire: Kling, Simone
(86) Numéro de dépôt international: PCT/FR2006/000816
(87) Numéro de publication internationale: WO 2006/111639

(56) Documents cités:
- EP-A- 0 960 865
- WO-A-20/05016843
- DE-U1- 29 915 326
- DE-U1-7202004 010 46

## Description

L'invention concerne l'utilisation d'un adjuvant pour réduire les ions Cr(VI) en Cr(III), pour réduire la teneur en chrome (VI) de liants hydrauliques, et un procédé pour sa préparation.

Le chrome (VI) hydrosoluble peut provoquer des réactions d'irritation ou d'allergie en contact avec la peau et est classé par l'Union européenne dans la catégorie des substances devant être assimilées à des cancérogènes. Aussi, il est recommandé d'en réduire l'exposition au possible. Ainsi, la Directive Européenne 2003/53/CE du 18 juin 2003 impose pour les ciments une teneur en chrome (VI) inférieure à 2 ppm.

On connaît des adjuvants permettant de traiter le ciment pour réduire le chrome (VI). Ainsi, on peut utiliser des compositions contenant du sulfate de Fe (II) comme agent de réduction du chrome (VI). Toutefois, le Fe(II) est instable en solution aqueuse, ce qui nécessite une mise en oeuvre de ces adjuvants sous forme de poudre. Le dosage précis de poudres est délicat et requiert un appareillage spécifique. Par ailleurs, ces adjuvants perdent leur capacité de réduire les ions chrome (VI) rapidement en raison d'une oxydation des ions Fe(II) au contact avec l'air. Aussi, l'efficacité de ces adjuvants est réduite lorsqu'ils ont été stockés pendant une durée prolongée.

En milieu très basique (pH ≥ 13),comme dans le milieu interstitiel du ciment, l'étain Il réagit avec les ions hydroxydes du milieu pour former l'ion Sn(OH)₄²⁻ selon l'équation 1.

Sn²⁺ + 4 OH⁻ → Sn(OH)₄²⁻ équation 1

L'ion Sn(OH)₄²⁻ est susceptible de réduire CrO₄²⁻ en Cr(OH)₃.selon la réaction d'oxydoréduction de l'équation 2.

2 CrO₄²⁺ + 8H₂O + 3Sn(OH)₄²⁻ → 2 Cr(OH)₃ + 4OH⁻ + Sn(OH)₆²⁻ équation 2

Pour mémoire, les potentiels redox des couples mis en jeu lors de la réaction sont les suivants :

E° (Sn(OH)₆²⁻/Sn(OH)₄²⁻) = -0.96 V

E° (CrO₄²⁻/Cr(OH)₃ = -0.12 V

On connaît ainsi de WO 2005/016843 une suspension colloïdale d'hydroxyde d'étain (II) stabilisée par un agent de stabilisation et éventuellement par un épaississant.

Les ions étain (II) tendent à s'oxyder en étain (IV), ce qui réduit l'efficacité de l'adjuvant. Par ailleurs, la solubilité des sels d'ions d'étain (II) n'est satisfaisante qu'à des pH très acides. Or les solutions présentant un pH inférieur à 2 sont considérées comme corrosives, et leur mise en oeuvre requiert un équipement adapté coûteux.

On connaît par ailleurs de EP 0960 865 un agent de réduction d'ions Cr(VI) dans des compositions hydrauliques comprenant des ions d'étain (II) en association synergique avec un acide lignosulfonique.

Un des buts de la présente invention était donc de proposer pour ladite utilisation un adjuvant pour réduire les ions Cr(VI) en Cr(III) sous forme de solution stable au stockage et dont la capacité de réduction des ions Cr(VI) reste sensiblement constante pendant une durée prolongée. On entend par le terme stabilité désigner principalement l'absence de précipitation, même à un pH supérieur à 2.

Un autre but de la présente invention était de proposer pour cette utilisation un tel adjuvant non corrosif et présentant un pH supérieur à 2.

Un autre but de la présente invention était de proposer pour cette utilisation un tel adjuvant dans lequel l'étain (II) est stable (pas de précipitation) même en milieu alcalin.

Un autre but de la présente invention était de proposer pour cette utilisation un tel adjuvant qui ne modifie pas les propriétés et le comportement des matériaux adjuvantés.

Un autre but de la présente invention était de proposer pour cette utilisation un tel adjuvant permettant de réduire la teneur en chrome (VI) des matériaux adjuvantés à une valeur inférieure à 2 ppm.

Un autre but de la présente invention était enfin de proposer pour cette utilisation un tel adjuvant qui soit d'utilisation et de fabrication économique.

Ces buts et d'autres sont atteints par la présente invention, laquelle a pour objet, selon un premier aspect, l'utilisation d'un adjuvant comprenant une solution aqueuse d'un complexe d'étain (II) et d'un acide carboxylique ou d'un de ses sels pour réduire les ions Cr(VI) en Cr(III).

Avantageusement, l'adjuvant se trouve sous forme de solution aqueuse limpide.

Selon l'invention, le complexant de l'étain (II) utilisé est un acide carboxylique ou un de ses sels. De préférence, l'acide carboxylique est choisi parmi les acides carboxyliques hydroxylés, comme l'acide gluconique, l'acide tartrique, l'acide citrique, et leurs sels. Particulièrement préférés sont les sels de l'acide gluconique, notamment le gluconate de sodium. Bien entendu, on pourra utiliser d'autres composés susceptibles de libérer des ions carboxylates en solution.

La concentration en complexe d'étain (II) dans l'adjuvant peut varier dans une large mesure. En pratique, elle est réglée afin de limiter l'apport en eau sans conduire à une viscosité trop élevée. Habituellement, elle sera comprise entre 1 et 30, et de préférence entre 5 et 25% (exprimé en % en poids d'étain).

De préférence, l'adjuvant peut comprendre en outre un agent d'ajustement de pH comme par exemple l'hydroxyde de sodium. Afin d'éviter une modification intempestive des propriétés et du comportement des matériaux traités, l'agent d'ajustement de pH est de préférence choisi parmi des additifs utilisés habituellement dans la préparation de ces matériaux. L'agent d'ajustement de pH peut ainsi être choisi pour le traitement de ciments notamment parmi les alkanolamines, en particulier la triéthanolamine, la tri-isopropanolamine.

Enfin, l'adjuvant décrit peut par ailleurs contenir d'autres additifs habituels pour l'application visée, notamment pour la préparation du liant hydraulique tel que le ciment, comme des agents de moutures, des agents activateurs de résistances, des agents entraîneurs d'air.

En particulier, l'adjuvant peut comprendre en outre un agent anti-oxydant afin de prolonger encore sa stabilité au stockage. Cet anti-oxydant pourra être choisi de manière avantageuse dans la famille des piégeurs de radicaux libres, comme par exemple l'hydroquinone et ses dérivés, le gallate de propyle, 2(3) t-butyl-4-hydroxyanisole, 2,6-di-tert-butyl-p-cresol, l'éthylvanilline, l'huile de romarin, la lécithine ou la vitamine E.

Il est également décrit un procédé de préparation de l'adjuvant décrit, comprenant les étapes consistant à mettre en contact un sel d'étain (II) avec de l'acide carboxylique ou un de ses sels en présence d'une quantité appropriée d'eau.

De préférence, le ratio molaire acide carboxylique - composé d'étain (II) est de 0,5 : 1 à 5 :1. Bien que la structure du complexe étain (II) - acide carboxylique formé ne soit pas élucidée avec certitude, on constate que la stabilité de la solution (solution limpide sans précipitation) à basse température et à pH alcalin est particulièrement élevée pour un ratio supérieur à 1,5 :1 à 2 :1. Cette stabilité est maintenue pour des ratios supérieurs.

La nature du composé d'étain (II) mis en oeuvre importe peu. En pratique, il sera choisi parmi les sels d'étain (II) solubles dans l'eau, tels que le chlorure d'étain (II), le sulfate d'étain, le fluorure d'étain, l'acétate d'étain.

La réaction entre le composé d'étain (II) et l'acide carboxylique ou son sel est rapide et complète. L'ordre d'introduction des réactifs est indifférent. La réaction aboutit à la formation d'un complexe hydrosoluble, lequel est stable en milieu acide comme en milieu alcalin (jusqu'à pH=14). L'étain (II) ainsi complexé est stable vis-à-vis de l'oxydation, mais disponible pour une réaction d'oxydoréduction avec le chrome (VI).

L'adjuvant décrit est particulièrement utile pour la fabrication de matériaux à teneur en chrome (VI) réduite.

Il est également décrit un procédé de préparation d'un matériau à teneur réduite en chrome (VI), comprenant l'étape consistant à mettre le matériau en contact avec une quantité appropriée d'adjuvant décrit. On entend par le terme « teneur réduite en chrome (VI) » désigner en particulier une teneur inférieure à 2 ppm de chrome (VI) hydrosoluble.

Particulièrement visés sont les matériaux de type liant hydraulique. On entend par « liant hydraulique » désigner alors notamment les ciments, mais aussi le sulfate de calcium et ses formes hydratées, les cendres volantes et les laitiers.

La mise en oeuvre de l'adjuvant tel que décrit permet notamment la préparation de ciments présentant une teneur inférieure à 2 ppm et remplissant dès lors les exigences posées par la Directive Européenne 2003/53/CE mentionnée.

L'invention vise l'utilisation de l'adjuvant décrit pour la préparation d'un matériau à teneur réduite en chrome (VI).

L'adjuvantation est réalisé au cours de l'étape de préparation du ciment en cimenterie. Elle consiste à introduire l'adjuvant, après l'étape d'obtention du clinker, au moment de la préparation du ciment.

Selon un mode de réalisation préféré, l'adjuvant est mis en oeuvre, dans le cadre de la préparation de ciment, au moment du broyage.

Le dosage sera avantageusement déterminé en fonction de la teneur en ions chrome(\/I) hydrosolubles du matériau relevée.

L'invention sera mieux comprise à la lecture des exemples donnés à titre illustratif mais non limitatif, et de la figure en annexe, laquelle montre :
Fig. unique : le déplacement chimique en RMN¹¹⁹Sn:
   (a) d'une solution de SnCl₂ à 25% en poids;
   (b) d'une solution préparée selon l'exemple 7 ;
   (c) d'une solution préparée selon l'exemple 8 ; et
   (d) d'une solution préparée selon l'exemple 9.

### EXEMPLES

Sauf indication contraire, les pourcentages indiqués s'entendent comme des pourcentages en masse de l'espèce considérée, c'est-à-dire de chlorure d'étain (SnCl₂) ou gluconate de sodium.

### EXEMPLE 1

Dans un récipient adapté, muni d'un agitateur, on introduit 29.32 g d'eau puis 25 g de SnCl₂ dihydraté puis on agite à température ambiante jusqu'à dissolution complète. On ajoute ensuite 45.68 g de gluconate de sodium tout en maintenant l'agitation. On obtient une solution limpide légèrement jaune ayant un pH de 2.5.

### EXEMPLES 2 à 9

On répète l'exemple 1 mais en modifiant les quantités de chlorure d'étain et de gluconate de sodium selon les quantités indiquées dans le tableau 1.

L'aspect des adjuvants préparés selon les exemples 1 à 9 est évalué à température ambiante puis après stockage à froid (0°C) pendant 24 heures. Les résultats sont résumés dans le tableau 1 ci-dessous.

On constate que la solution de l'exemple 6 est très visqueuse et présente un dépôt. Il est supposé qu'il s'agit d'une solution sursaturée.

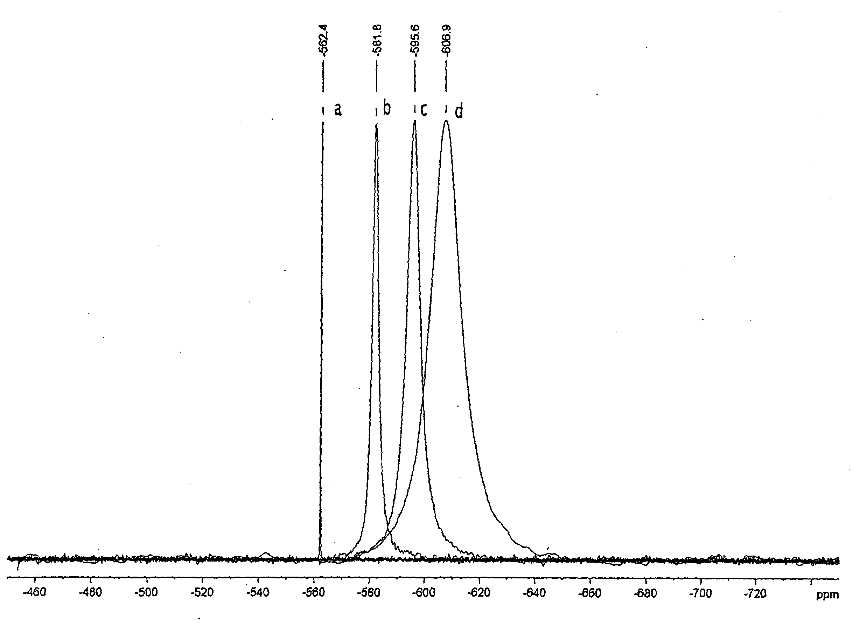

Les solutions selon les exemples 7, 8 et 9 ont été étudiées par RMN¹¹⁹Sn (Fig.1 (b), (c) et (d)) et comparées à une solution de SnCl₂ à 25% en poids (Fig.1 (a)).

Les expériences RMN étain ont été réalisées à 300K sur un spectromètre Bruker Avance 300 (111.9 MHz pour l'étain 119) équipé d'une sonde BBI 5 mm.

Les solutions ont été étudiées en l'état sans dilution ni ajout d'un solvant de lock, la largeur des résonances étant bien supérieure à la stabilité du champs magnétique (∼2 Hz). La séquence d'impulsions était constituée d'une unique impulsion de 30°, suivie de l'acquisition du signal de précession libre sur 16k points. Le délai entre impulsions est de 0,244 secondes et correspond au temps d'acquisition.

Ces données RMN mettent en évidence la formation de complexes entre le gluconate et l'étain(II). En effet, le déplacement chimique de l'étain en l'absence de gluconate (spectre a) - 562 ppm est très différent de celui de l'étain en présence de gluconate (spectres b,c,d) dans lesquels le déplacement chimique est supérieur à - 580 ppm. Cette différence nette de déplacement chimique est une preuve univoque de la complexation de l'étain par le gluconate.

**Tableau 1**

| **Exemples** | **étain (% de SnCl₂)** | **Gluconate de sodium (%)** | **Ratio molaire gluconate/étain** | **Aspect** | **Aspect à 0°C** |
|---|---|---|---|---|---|
| 1 | 15 | 13.76 | 1 : 1 | Laiteux | Précipite |
| 2 | 15 | 20.64 | 1.5 : 1 | Laiteux | Précipite |
| 3 | 15 | 27.52 | 2 : 1 | Limpide | Limpide |
| 4 | 30 | 27.52 | 1 : 1 | Limpide | Précipite |
| 5 | 30 | 41.28 | 1.5 : 1 | Limpide | Limpide |
| 6 | 30 | 55.04 | 2 : 1 | dépôt, visqueux | Dépôt, visqueux |
| 7 | 25 | 22.84 | 1 : 1 | Léger voile | Précipite |
| 8 | 25 | 34.28 | 1.5 : 1 | Limpide | Limpide |
| 9 | 25 | 45.68 | 2 : 1 | Limpide | Limpide |

On constate que les solutions préparées avec un ratio molaire gluconate / étain de 1.5: 1 et 2:1 sont limpides à température ambiante et ne précipitent pas, même après un stockage prolongé à 0°C. En termes de concentration, on constate que les solutions préparées avec une quantité de SnCl₂ entre 15 et 25% sont stables pour un ratio molaire gluconate / étain de 2 : 1, alors que les solutions préparées avec une quantité de SnCl₂ de 25% sont limpides après stockage à 0°C même pour un ratio molaire de 1 ,5 : 1.

Afin d'expliciter la notion de limpidité des solutions, des mesures de turbidité ont été réalisées au moyen d'un turbidimètre TUB 550 IR de marque WTW sur les solutions préparées selon les exemples 1, 3, 7, 8 et 9. Les résultats sont résumés dans le tableau 2 ci-dessous.

**Tableau 2**

| **Exemples** | **étain (% de SnCl₂)** | **Gluconate de sodium (%)** | **Ratio molaire gluconate/étain** | **Aspect** | **Turbidité** |
|---|---|---|---|---|---|
| 1 | 15 | 13.76 | 1 : 1 | Laiteux | 1004 |
| 3 | 15 | 27.52 | 2 : 1 | Limpide | 3.7 |
| 7 | 25 | 22.84 | 1 : 1 | Léger voile | 42.5 |
| 8 | 25 | 34.28 | 1.5 : 1 | Limpide | 6.2 |
| 9 | 25 | 45.68 | 2 : 1 | Limpide | 6.3 |

La mesure de turbidité fait clairement la différence entre une solution limpide (turbidité faible) et une solution laiteuse (turbidité élevée).

Une mesure de la turbidité à 24h (valeur mesurée 927) sur l'exemple 7 monte l'apparition d'un précipité. Les solutions préparées selon les exemples 3 8 et 9 restent au même niveau de turbidité même après un stockage prolongé (supérieur à 1 mois). Cela tend à montrer qu'il existe un seuil de turbidité, en dessous duquel la solution conserve la turbidité faible durant un temps de stockage prolongé.

### a) Tests de réduction du chrome (VI) de ciments

Les solutions préparées selon les exemples 1 à 9 ont été utilisées telles quelles pour traiter un ciment à teneur en chrome (VI) soluble variant entre 3.5 ppm et 5 ppm suivant les lots.

Le traitement du ciment est réalisé par addition au ciment au niveau de l'entrée du broyeur.

Le dosage en adjuvant est indiqué en ppm de solution par ppm de chrome (VI) présent dans le ciment, tel que déterminé par dosage préalable.

Le chrome (VI) du ciment ainsi traité est ensuite déterminé immédiatement puis après 1 mois de vieillissement en sac, conformément à la norme EN 196-10 qui précise le protocole de dosage du Chrome VI dans les ciments.

Les résultats sont rassemblés dans le tableau 3 ci-dessous.

**Tableau 3**

| **Exemples** | **étain (% SnCl₂)** | **Ratio molaire gluconate / étain** | **Dosage de solution [ppm]** | **Cr(VI) T=0 [ppm]** | **Cr(VI) T=1 mois [ppm]** |
|---|---|---|---|---|---|
| 1 | 15 | 1 : 1 | 400 | 0.3 | 0.2 |
| | | | 300 | 0.3 | 0.3 |
| 2 | 15 | 1.5 : 1 | 400 | 0.2 | 0.2 |
| | | | 300 | 0.3 | 0.2 |
| 3 | 15 | 2 : 1 | 400 | 0.2 | < 0.1 |
| | | | 300 | 0.2 | 0.2 |
| 4 | 30 | 1:1 | 200 | 0.2 | 0.2 |
| | | | 150 | 0.3 | 0.4 |
| 5 | 30 | 1.5:1 | 200 | 0.2 | 0.1 |
| | | | 150 | 0.2 | 0.2 |
| 6 | 30 | 2:1 | N.D. | N.D. | N.D. |
| 7 | 25 | 1:1 | 240 | 0.2 | 0.2 |
| | | | 180 | 0.3 | 0.3 |
| 8 | 25 | 1.5:1 | 240 | 0.2 | 0.1 |
| | | | 180 | 0.3 | 0.3 |
| 9 | 25 | 2 : 1 | 240 | 0.2 | < 0.1 |
| | | | 180 | 0.3 | 0.3 |

On constate que l'ensemble des solutions testées permet de réduire la teneur en chrome (VI) à une valeur inférieure à 0,5 ppm, donc bien en dessous du seuil réglementaire applicable aux ciments selon la Directive mentionnée en plus haut. Ces résultats sont maintenus dans le temps, les valeurs relevées après un mois étant constantes à l'erreur de reproductibilité près.

### b) stabilité des adjuvants vis-à-vis du pH

La stabilité des solutions préparées vis-à-vis du pH a été évaluée comme suit.

Un échantillon est prélevé respectivement dans les solutions préparées selon les exemples 7, 8 et 9 puis introduit dans un récipient approprié équipé d'un agitateur et d'une sonde de mesure de pH. Sous agitation et à température ambiante, on ajoute dans chacune des solutions une solution de NaOH au goutte-à-goutte pour établir successivement un pH de 5, 7, 9, 11 et 13,5. Après stabilisation du pH, l'aspect des solutions est évalué visuellement. Les résultats sont rassemblés dans le tableau 4 ci-dessous. Même après plusieurs semaines de stockage, les solutions à pH 13,5 des exemples 8 et 9 sont toujours limpides.

**Tableau 4**

| **pH** | **Exemple 7** | **Exemple 8** | **Exemple 9** |
|---|---|---|---|
| **2,5** | Limpide | Limpide | Limpide |
| **5** | Léger précipité | Limpide | Limpide |
| **7** | Léger précipité | Limpide | Limpide |
| **9** | Précipité | Limpide | Limpide |
| **11** | Précipité | Limpide | Limpide |
| **13,5** | Pâte | Limpide | Limpide |

Ces essais démontrent que les adjuvants préparés avec un ratio molaire gluconate / étain supérieur à 1 : 1 sont stables, c'est-à-dire limpides, même à des pH alcalins. Il est supposé que le précipité dans la solution selon l'exemple 7 provient d'étain (II) présent sous forme non complexé, dû au défaut de gluconate dans cette solution.

La stabilité du complexe confère une liberté de formulation très appréciable, permettant notamment une compatibilité avec un large choix d'additifs. Par ailleurs, elle peut contribuer à stabiliser l'adjuvant dans des matériaux à pH très alcalin tel que le ciment notamment, permettant ainsi de pérenniser l'action réductrice des ions chrome (VI). Enfin, la stabilité des adjuvants leur confère une certaine robustesse vis-à-vis de variations des conditions de process.

## Revendications

1. Utilisation d'un adjuvant comprenant une solution aqueuse d'un complexe d'étain (II) et d'un acide carboxylique ou d'un de ses sels pour réduire les ions Cr(VI) en Cr(III).

2. Utilisation selon la revendication 1, dans laquelle l'adjuvant est sous forme de solution aqueuse limpide.

3. Utilisation selon la revendication 1 ou 2, dans laquelle l'acide carboxylique est l'acide gluconique.

4. Utilisation selon l'une des revendications 1 à 3, dans laquelle l'adjuvant comprend en outre un agent d'ajustement de pH.

5. Utilisation selon la revendication 4, dans laquelle l'agent d'ajustement de pH est choisi parmi les alkanolamines.

6. Utilisation selon la revendication 4, dans laquelle l'agent d'ajustement de pH est l'hydroxyde de sodium.

7. Utilisation selon l'une des revendications 1 à 6, dans laquelle l'adjuvant comprend en outre un agent anti-oxydant choisi parmi l'hydroquinone et ses dérivés, le gallate de propyle, (t-butyl-4-hydroxyanisole), (2,6-di-tert-butyl-p-cresol), l'éthylvanilline, l'huile de romarin, la lécithine et la vitamine E.

8. Utilisation selon l'une des revendications 1 à 7, pour réduire les ions Cr(VI) en Cr(III) dans un liant hydraulique.

9. Utilisation selon la revendication 8, dans laquelle le liant hydraulique est choisi parmi les ciments, le sulfate de calcium et ses formes hydratées, les cendres volantes et les laitiers.

10. Utilisation selon l'une des revendications 1 à 9 pour réduire la teneur en ions Cr(VI) à une valeur inférieure à 2ppm.

## Claims

1. Use of an adjuvant comprising an aqueous solution of a tin (II) complex comprising a carboxylic acid or one of its salts to reduce Cr(VI) ions into Cr(III) ions.

2. Use according to claim 1, in which the adjuvant is in the form of a clear aqueous solution.

3. Use according to claim 1 or 2, in which the carboxylic acid is gluconic acid.

4. Use according to any one of claims 1 to 3, in which the adjuvant further comprises a pH adjusting agent.

5. Use according to claim 4, in which the pH adjusting agent is chosen from the alkanolamines.

6. Use according to claim 4, in which the pH adjusting agent is sodium hydroxide.

7. Use according to any one of claims 1 to 6, in which the adjuvant further comprises an antioxidant agent chosen from hydroquinone and its derivatives, propyl gallate, (t-butyl-4-hydroxyanisole), (2,6-di-tert-butyl-p-cresol), ethyl vanillin, rosemary oil, lecithin and vitamin E.

8. Use according to any one of claims 1 to 7 to reduce the Cr(VI) ions into Cr(III) ions in a hydraulic binder.

9. Use according to claim 8, in which the hydraulic binder is chosen from cements, calcium sulphate and its hydrated forms, fly ash and slag.

10. Use according to any one of claims 1 to 9 to reduce the content of Cr(VI) ions to a value of less than 2 ppm.

## Patentansprüche

1. Verwendung eines Hilfsstoffes , umfassend eine wässrige Lösung eines Zinn(II)-Komplexes umfassend eine Carbonsäure oder eines Salzes dieser Verbindung um die Ionen Cr(VI) in Cr(III) zu reduzieren.

2. Verwendung nach Patentanspruch 1, bei der der Hilfsstoff die Form einer klaren wässrigen Lösung aufweist.

3. Verwendung nach Patentanspruch 1 oder 2, bei der die Carboxylsäure Gluconsäure ist.

4. Verwendung nach einem der Patentansprüche 1 bis 3, bei der der Hilfsstoff außerdem ein pH-Einstellmittel umfasst.

5. Verwendung nach Patentanspruch 4 , bei der das pH-Einstellmittel unter den Alkanolaminen ausgewählt wird.

6. Verwendung nach Patentanspruch 4 , bei der das pH-Einstellmittel Natriumhydroxyd ist.

7. Verwendung nach einem der Patentansprüche 1 bis 6, bei der der Hilfsstoff unter anderem umfasst ein Antioxodationsmittel , das ausgewählt wird aus Hydroquinon und seinen Derivaten, Propylgalat, (t-Butyl-4-hydroxyanisol), (2,6-Di-tert-butyl-p-cresol), Ethylvanilin, Rosmarinöl, Lecithin und Vitamin E.

8. Verwendung nach einem der Patentansprüche 1 bis 7, um in einem hydraulischen Bindemittel die Ionen Cr(VI) in Cr(III) zu reduzieren.

9. Verwendung nach Patentanspruch 8 , bei der das hydraulische Bindemittel ausgewählt wird aus Zementen, Kalziumsulfat und seinen hydratisierten Formen , fliegenden Flugaschen und Schlacken.

10. Verwendung nach einem der Patentansprüche 1 bis 9, um den Gehalt an Ionen Cr(VI) auf einen Wert unter 2ppm zu halten.
